# EUROPEAN PATENT SPECIFICATION

(11) **EP 1 969 159 B1**
(45) Date of publication and mention of the grant of the patent: **13.05.2009**
(21) Application number: 06842785.5
(22) Date of filing: 29.11.2006
(51) Int. Cl.: C25B 9/18, C02F 1/461

(54) **MEMBRANE ELECTROLYTIC REACTORS SYSTEM WITH FOUR CHAMBERS**
MEMBRAN-ELEKTROLYSEREAKTORENSYSTEM MIT VIER KAMMERN
SYSTEME DE REACTEURS ELECTROLYTIQUES A MEMBRANE AVEC QUATRE COMPARTIMENTS

(30) Priority: 30.12.2005 IT RM20050666
(43) Date of publication of application: 17.09.2008
(73) Proprietor: E.C.A.S. SRL, 40069 Zola Predosa (BO) (IT)
(72) Inventor: BOHNSTEDT, Ralph, 40069 Zola Predosa (BOLOGNA) (IT); SURBECK, Urs, 4133 Pratteln (BL) (CH); BARTSCH, Reinhard, 55025 Montespertoli (FI) (IT)
(74) Representative: Sarpi, Maurizio
(86) International application number: PCT/IT2006/000829
(87) International publication number: WO 2007/077587

(56) References cited:
- DE-A1- 19 526 545
- US-A- 4 297 194
- US-A1- 2003 015 419

## Description

This invention relates to the field of chemical electrolysis, and in particular the electrolytic treatment of weak brine for the production of pH-neutral solutions to be used in the disinfection of water and surfaces.

It is known that the production of disinfectant solutions containing chlorine, through the electrolytic treatment within cells, whose anode and cathode chambers are separated by a dividing wall, a membrane, or an ion-selective diaphragm.

These solutions are often regenerated in various concentrations from aqueous brine solutions and are applied in the disinfection of drinking water and surfaces. For this purpose, various electrolytic-cell and process-parameter systems are used. The systems are essentially distinguished by the presence of round cells or flat cells.

Unlike industrial electrolysis in the production of chlorine gas (and the resulting application in large industries) and the production of hypochlorite solutions that - once they have been necessarily stabilised with alkalis - are available on the market in canisters, these systems are often incorporated into small pipe networks in the scope of certain projects to meet particular requirements, that is, specifications and characteristics of the product of the electrolysis.

The excellent biocidal and fungicidal characteristics of these products, as well as their effectiveness in the modern fight against contamination risks - particularly in the field of drinking water and public hygiene - are sufficiently documented in specialist publications. In this context, it should be especially pointed out that a solution produced through membrane cells, which is immediately available, has disinfectant specifications greater than two logarithmic powers compared to the hypochlorite solutions on the market, which have an identical active-chlorine content.

### Evaluation of the state of the art

Various producers of devices use tubular cells from Russia, as illustrated in the description of patent DE 69609841T. However, these cells have the disadvantage that their performance is linked to their dimensions, which makes it necessary to use more elements to enhance performance, which then leads to problems of compatibility and technological difficulties during installation. Furthermore, there are various types of the aforementioned flat cells (e.g. DE 7110972 U - device for the production of bleach through the electrolysis of an aqueous solution) that, if large volumes are being subjected to treatment, can be enhanced and therefore increase performance; however, the product of the electrolysis does not obtain the desired quality. In particular, it does not obtain the chemical characteristics necessary to ensure that treatment of the water pipes is free of the effects of corrosion.

It can therefore be concluded that the devices and the procedures currently available on the market have the following disadvantages:
- to increase treatment capacity, it is necessary to link various conventional cells, and this leads to significant disadvantages of construction and production to the extent that the hydraulic connections of these devices produced in the Russian Federation do not meet European and International standards;
- the flat cells available on the market produce a single product, the acidic properties of which have caused substantial corrosion damage with a strong economic impact when used, for example, in disinfection;
- currently, production of the neutral and electrochemically activated solution is still only possible by mixing the parts obtained from the electrochemical process of separation, that is the mixing of the acid component and the alkaline component but which does, however, lead to a substantial drop in the disinfecting effect.

### Description of the invention

The primary purpose of this invention is to create a block of electrolytic cells to satisfy whatever is required for the production of an economically effective and efficient disinfectant solution that is pH neutral and therefore environmentally friendly.

Another purpose of the invention is to meet the requirement of enabling industrial reproducibility at small sizes and to guarantee simple maintenance and easy assembly in strict compliance with the process parameters.

These purposes are achieved by developing and integrating, in a single block of reactors, a specific flow chart consisting of a precise sequence of the cathode and anode treatment of the initial solution, as well as the essential discharge of the gases produced during the process.

### Advantages of the invention

As confirmed by the tests carried out, this invention fills the following functions and obtains the following important advantages:
- the integration of a specific flow chart in a single cell block provides important technological advantages owing to hydraulic impermeability, reliable operation, monitoring of the process, as well as advantages in assessing the profitability of the cell-block production process that can now be manufactured with a licence in medium-sized establishments;
- precise controllability of degassing and therefore, the pH value of the product subject to electrolysis; optimal potential redox values are therefore obtained without causing effects of corrosion;
- greater effectiveness of the pH-neutral solution compared to traditional electrolytic solutions;
- little chloride residue in the final solution, and therefore optimal use of the salt solution;
- the use of flat electrodes and rectangular sections in the reaction chambers enables higher constancy of the force lines and therefore greater homogeneity of the product of electrolysis;
- the use of high-quality alloys reduces wear of the electrodes to a minimum;
- strength of the materials used;
- the block is resistant to impacts (important for mobile devices);
- easy to assemble and disassemble.

The description of the invention will be better understood by referring to the appended design tables that illustrate solely by way of example a preferred form of realisation. In the drawings:
figure 1 is a reduced-scale isometric view of a membrane electrolytic-reactors block with four chambers according to the invention;
fig. 1A is an exploded view of the reactors block of fig. 1, which shows the specific details relating to the two halves of the block;
figures 2 and 3 are vertical cross-section views of the two respective halves of the block.
figures 4 and 5 are cross-section views according to the general outlines A-A' and B-B' of figure 2.

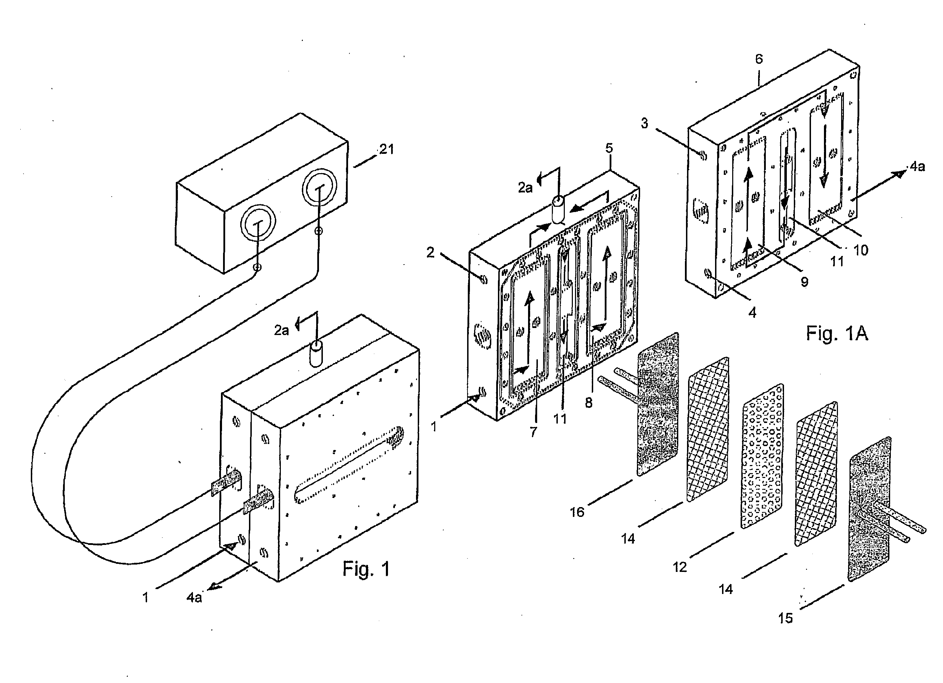

With regard to the figures, the membrane electrolytic-reactors block with four chambers, according to the invention, has the appearance of a parallelepiped box made up of two halves 5 and 6 that are mounted one on top of the other to respectively form the cathode-side bottom and the anode-side top of an electrolytic reactor. On half 5 there are cathode chambers 7 and 8, while in half 6 there are anode chambers 9 and 10. Between cathode chambers 7 and 8 and anode chambers 9 and 10 two semi-chambers 11 are interpositioned, which, when halves 5 and 6 are coupled, form a degassing chamber 11. Two selective film membranes are indicated by 12 for cation exchange. The two anode-side electrodes are indicated by 15 and the two cathode-side electrodes are indicated by 16. In the space between each electrode 15 and 16, and membrane 12, respectively, a vortexer and spacer wall 14 is positioned. Fig.1a illustrates by way of example, the reciprocal position of membrane 12, electrodes 15 and 16, and the spacer tissues 14, in relation to the first cathode chamber 7.

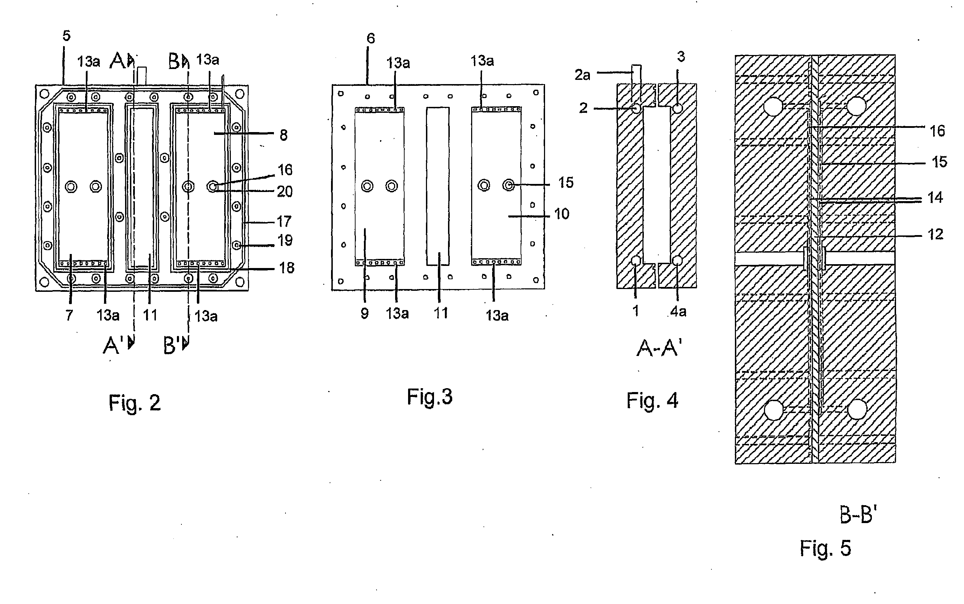

In fig. 2 the seals of the chambers are indicated by 17, the seals of the connecting components are indicated by 18, the seals of the membranes are indicated by 19, and the seals of the electrodes are indicated by 20.

The electric power supply is provided by a network transformer 21 suitably built and configured.

### Brief summary of the invention

The completely demineralised inlet water saturated with a concentration of 0.4% high-purity salt is conducted in equal parts through the inlet opening 1 of the reactor block, into the cathode chambers 7 and 8 separated from the anode chambers 9 and 10 by the cationic-exchange selective membrane 12, and vortexed to homogeneity by means of a tissue spacer wall 14 mounted in the chambers on both sides of the membrane; the water is then passed from the cathode-side electrodes 16 and, after being discharged from channel 2, it is conducted into the degassing chamber 11. A certain amount (normally 10-20%) of the treated solution including the gases formed during the reaction, is discharged by means of the adjustable outlet 2a. The main residual flow is conveyed from the lower outlet of the degassing chamber 11 first into anode chamber 9 or then into anode chamber 10 if it is it is uniformly subjected to the effect of the electrical voltage created by the anode-side electrodes through the spacer wall 14, which can then be removed as a finished product at outlet 4a.

### Description of the invention

The designs, further details, and the corresponding effects are described in detail below:
The inflowing water, which is of a certain quality, that is drinking quality, is saturated with about 4 g/l of salt, and is conveyed in certain amounts - to be established according to the reactor dimensions - to inlet 1 on half 5 of the reactor block whose opening is fitted with an internal thread of 1/4" and hence enables the connection of standard tubes in suitable materials.

Following the above-described inflow into the reactor, the processing liquid, that is, the water that is completely demineralised and saturated with a small addition of pure salt, - referred to as weak brine - is subjected to the initial electrolytic process, that is, the cathode treatment carried out simultaneously in the cathode chambers 7 and 8. To this end, the weak brine will first pass through the inlet channel 1, which is an opening (the diameter of which, for information purposes, is 11.5 mm) which starts downstream of the inlet and passes transversally along the bottom of half 5 of the reactor, and is then injected simultaneously into two cathode chambers 7 and 8 passing from the respective inlet openings 13 connected to the same inlet channel 1. An advantage is provided by the fact that this inlet channel 1 is mechanically machined in the housing of half 5 of the reactor block, which, on the opposite side is closed, in line with the outlet of the reactor box, with a plug. The inlet openings 13 (which, for information purposes, have a diameter of 2.5 mm) are calculated so as to enable equal distribution of the main flow between the two chambers 7 and 8.

In a preferred form of realisation, the inflowing amount of the weak brine to be subjected to treatment is 100 l/h resulting from the relationship between all the parameters affecting the production process, such as the flow, the salt load, amperage, the size of the reaction chambers, the shape and distance of the vortexing and spacer tissues and of the membranes. For upsizing or power reduction, the size ratio of the implementation is determined proportionally; in-depth tests carried out on prototypes demonstrated that the following device sizes turned out to be suitable: 50 l/h, 100 l/h, 150 l/h, 300 l/h 600 l/h, and 1000 l/h.

After inflow into the two reaction chambers 7 and 8 on the cathode-side, which are, as previously mentioned, separated from those of 9 and 10 on the anode side by a membrane 12, the process liquid is conveyed to the upper outlet openings 13a of the chambers through the previously mentioned vortexing and spacer tissue wall 14, which is positioned in the space between electrode 16 and membrane 12.

At this point, the process liquid is conveyed from the outlet openings 13a in the outlet channel 2 of the by-product. Like inlet channel 1, this outlet channel consists of a continuously drilled hole through the upper part or the top of half 5 of the reactor, the ends of which are, however, closed off with plugs. The outlet valve 2a is located halfway through the drilled hole.

This outlet valve 2a is adjustable and is used, as described hereunder, for degassing during the production process and to discharge the alkaline by-product of the electrochemical treatment, which can then be used for cleaning purposes.

The vortexing and spacer tissue wall 14 enables the weak brine to pass homogeneously between electrodes 15 and 16. The result is that in the reaction chambers the electrical field will be created in a homogeneous manner thus guaranteeing the quality of the product and long life of the electrodes.

The product, which has become very alkaline as a result of electrolytic activation, is conveyed through an opening joining channel 2, into a part of the degassing chamber 11; by adjusting the outlet valve 2a in the other part, it is possible to discharge the gas, together with a small part of the initial alkaline product (about 10-20%), which rises to the degassing chamber and which is formed in this initial phase of electrolytic treatment. In the lower part of the degassing chamber 11, a further passage identical to the upper connection between chamber 11 and outlet chamber 2 of the by-product. The liquid from the degassing process passes (see fig. 1a) through this passage 4 and is then conveyed to the second anode chamber 9 passing through the aforementioned inlet openings 13 of the chambers on the anode side. At this point, channel 4 is closed off in the centre and split into two segments.

After this initial anode treatment, the activated solution is subjected to a second treatment, which is applied by passage from the second chamber 9 of the anode side to the first chamber 10 of the same anode side, in the direction of the arrows in fig. 1a. At this point, the passage marked by a 3 takes an identical form to the other drilled holes 1, 2, and 4, but the ends are closed with appropriate plugs.

From chamber 10, the finished product, that is, the pH-neutral solution that is electrochemically activated and intended for disinfecting purposes, is removed from the outlet marked by 4a for immediate use. Outlet 4a also has internal threading enabling the connection of standard tubes of suitable materials. In the illustrated preferred form of realisation, this internal thread is ¼".

As has been previously mentioned, the reactor box is made up of halves marked by 5 and 6, which are mounted one on top of the other. For the final prototype, the material PP (polypropylene) was used because of its high durability, and all the chambers, openings, and channels were milled or bored. However, in experiments, other comparable materials such as PE (high-density polyethylene) also showed satisfactory results with respect to lifetime or the tools necessary for milling. A further production method is die-casting, which is ideal for manufacturing in medium-sized industrial businesses.

The electrodes used on the anode side 15 are coated with a layer of titanium - iridium oxides, while the electrodes on the cathode side 16 are of Hastelloy 22 stainless steel. The maximum current density of the electrodes is rated at 5.3 KA/m², the dimensions of the electrode surfaces is calculated proportionally; that is to say, for a cell with a flow capacity of 100 1, a surface area of 7701 mm² is used both for the anode and cathode sides.

The membranes 12 of the electrolytic reactors block that are the subject of this invention are referred to as 'selective film membranes for cationic exchange' with a thickness, for information, of 140-150µm. These members can be defined as 'intelligent' since they do not have a particular anode and cathode side and therefore have reversible directions of use. In the prototypes, films were fitted that provided the advantage of a greater pressure gap compared to ceramic membranes, particularly they are supported by the spacer tissue 14. This tissue 14 consists of a synthetic wavy thread with a diameter of 0.5 mm, which forms a grid of rhomboidal shapes and which significantly influences the fluid-dynamic conditions of the reactor chamber and therefore the quality of the electrolysis product.

The network transformers 21, which supply electricity to the cell block, are used to regulate the amperage. These are also equipped with autonomous cooling, they rectify the electric current with a tolerance of 1%, and have a nominal residual time value of 1%. They therefore have characteristics that, in conjunction with the cell construction principles and in compliance with the process parameters and the quality of the process liquid, guarantee that the characteristics of the required electrolysis product are obtained.

A prototype of the described electrolytic reactor has been operating under the following conditions: 100 l/h flow capacity of completely demineralised water saturated with 4 g/l of high-purity salt, amperage 50 A with 24V, and 15% deviation on the cathode side. Reproducible result of the product characteristics: 350 ppm active chloride (measured as Cl₂), redox potential 800 mV, pH 6.9.

## Claims

1. Membrane electrolytic-reactors with four chambers with adjustable degassing for the production of pH-neutral disinfectant-solution products, by electrochemically activating weak brine for use in the disinfection of drinking water and surfaces, **characterised by** the fact that it is made up of two halves (5 and 6), which are coupled together to form the bottom cathode side and the top anode side respectively, of an electrolytic reactor, with cathode chambers (7 and 8) being machined into half 5, and anode chambers (9 and 10) being machined into half 6, and with two semi-chambers (11) being interpositioned between these cathode chambers (7 and 8) and anode chambers (9 and 10) on each side of the reactor, which form a degassing chamber (11) when the halves are coupled together; in this condition, each cathode chamber (7 and 8) is separated from the opposite anode chamber (10 and 9) by a selective cationic-exchange membrane (12) placed between the cathode-side electrodes (16) and anode-side electrodes (15), with a pair of vortexer and spacer walls (14) being interpositioned.

2. Membrane electrolytic-reactors with four chambers as in the preceding claim **characterised by** the fact that the weak brine injected at the reactor-block inlet (1) is subject to a single cathode electrochemical process and a duplicated anode electrochemical process with adjustable intermittent degassing in the degassing chamber (11) with an outlet (2a) fitted with a control valve or tap.

3. Membrane electrolytic-reactors with four chambers as in the preceding claims **characterised by** the fact that all the necessary hydraulic connections of the reaction chambers (7, 8) and (9, 10) and the degassing chamber (11) are couplings mechanically constituted by channels and bored holes (1, 2, 3, 4, 13, and 13a) in the housing of the two halves (5, 6) of the reactor block.

4. Membrane electrolytic-reactors with four chambers as in the preceding claims **characterised by** the fact that all chambers, openings, and channels can be machined either by milling in polyethylene or polypropylene blocks, or by die-casting.

5. Membrane electrolytic-reactors with four chambers as in the preceding claims **characterised by** the fact that the pH value of the electrolysis product is adjustable through the application of the flow chart and regulation of a degassing valve.

6. Membrane electrolytic-reactors with four chambers as in claim 1 **characterised by** the fact that the electrodes on the anode side have a titanium - iridium oxide coating.

7. Membrane electrolytic-reactors with four chambers as in claim 1 **characterised by** the fact that the electrodes on the cathode side are composed of Hastelloy C 22 stainless steel.

8. Membrane electrolytic-reactors with four chambers as in claim 1 **characterised by** the fact that the selective membrane separating the anode chambers and the cathode chambers is a selective cationic-exchange film membrane.

9. Membrane electrolytic-reactors with four chambers as in claim 1 **characterised by** the fact that the process liquid is conveyed to an outlet opening (13) through the spacer and vortexer wall (14) so that it passes homogeneously between the electrodes (15, 16) and in the reaction chambers a homogeneous electrical field is produced.

10. Membrane electrolytic-reactors with four chambers as in claim 1 **characterised by** the fact that a network transformer (21) is used.

11. Membrane electrolytic-reactors with four chambers as in claim 1 **characterised by** the fact that shutting mechanisms are fitted to prevent unauthorised opening of the reactor block.

## Patentansprüche

1. Membran-Elektrolysereaktoren mit vier Kammern mit einstellbarer Entgasung zur Produktion von pH-neutralen Desinfektionslösungsprodukten durch elektrochemisches Aktivieren einer schwachen Salzsole zur Verwendung bei der Desinfektion von Trinkwasser und Oberflächen, **gekennzeichnet durch** die Tatsache, dass sie jeweils aus zwei Hälften (5 und 6) bestehen, welche miteinander verbunden sind, um eine Kathodenunterseite bzw. Anodenoberseite eines Elektrolysereaktors zu bilden, wobei Kathodenkammern (7 und 8) in der Hälfte 5 und Anodenkammern (9 und 10) in der Hälfte 6 maschinell hergestellt sind und wobei zwei Halbkammern (11) zwischen diesen Kathodenkammern (7 und 8) und Anodenkammern (9 und 10) auf jeder Seite des Reaktors eingefügt sind, welche eine Entgasungskammer (11) bilden, wenn die Hälften miteinander verbunden sind; und in diesem Zustand jede Kathodenkammer (7 und 8) von der gegenüberliegenden Anodenkammer (10 und 9) **durch** eine selektive Kationenaustausch-Membran (12) getrennt ist, welche zwischen den kathodenseitigen Elektroden (16) und den anodenseitigen Elektroden (15) platziert ist, wobei ein Paar an Wirbeleinrichtungs- und Abstandshalterwänden (14) eingefügt bzw. zwischen denselben positioniert ist.

2. Membran-Elektrolysereaktoren mit vier Kammern nach dem vorangehenden Anspruch, **gekennzeichnet durch** die Tatsache, dass die schwache Salzsole, welche am Einlass (1) des Reaktorblocks eingespritzt wird, einem einfachen elektrochemischen Verfahren an der Kathode und einem verdoppelten bzw. doppelten elektrochemischen Verfahren an der Anode mit einer einstellbaren, intermittierenden Entgasung in der Entgasungskammer (11) mit einem Auslass (2a) unterzogen wird, welcher mit einem Steuerventil oder Hahn ausgerüstet ist.

3. Membran-Elektrolysereaktoren mit vier Kammern nach den vorangehenden Ansprüchen, **gekennzeichnet durch** die Tatsache, dass alle notwendigen Hydraulikanschlüsse der Reaktionskammern (7, 8) und (9, 10) und der Entgasungskammer (11) Verbindungen sind, welche **durch** Kanäle und Bohrungen (1, 2, 3, 4, 13 und 13a) im Gehäuse der zwei Hälften (5, 6) des Reaktorblocks mechanisch gebildet sind.

4. Membran-Elektrolysereaktoren mit vier Kammern nach den vorangehenden Ansprüchen, **gekennzeichnet durch** die Tatsache, dass alle Kammern, Öffnungen und Kanäle entweder **durch** Fräsen in Blöcke aus Polyethylen oder Polypropylen oder **durch** Druckgießen maschinell hergestellt werden können.

5. Membran-Elektrolysereaktoren mit vier Kammern nach den vorangehenden Ansprüchen, **gekennzeichnet durch** die Tatsache, dass der pH-Wert des Elektrolyseprodukts **durch** die Anwendung des Ablaufplans und Regelung eines Entgasungsventils einstellbar ist.

6. Membran-Elektrolysereaktoren mit vier Kammern nach Anspruch 1, **gekennzeichnet durch** die Tatsache, dass die Elektroden auf der Anodenseite eine Titan-Iridiumoxid-Beschichtung aufweisen.

7. Membran-Elektrolysereaktoren mit vier Kammern nach Anspruch 1, **gekennzeichnet durch** die Tatsache, dass die kathodenseitigen Elektroden aus rostfreiem Stahl Hastelloy C22 bestehen.

8. Membran-Elektrolysereaktoren mit vier Kammern nach Anspruch 1, **gekennzeichnet durch** die Tatsache, dass die selektive Membran, welche die Anodenkammern und Kathodenkammern trennt, eine selektive Kationenaustausch-Filmmembran ist.

9. Membran-Elektrolysereaktoren mit vier Kammern nach Anspruch 1, **gekennzeichnet durch** die Tatsache, dass die Prozessflüssigkeit **durch** die Abstandshalter- und Wirbeleinrichtungswand (14) derart zu einer Auslassöffnung (13) befördert wird, dass sie zwischen den Elektroden (15, 16) homogen durchfließt und in den Reaktionskammern ein homogenes elektrisches Feld erzeugt wird.

10. Membran-Elektrolysereaktoren mit vier Kammern nach Anspruch 1, **gekennzeichnet durch** die Tatsache, dass ein Netztransformator (21) verwendet wird.

11. Membran-Elektrolysereaktoren mit vier Kammern nach Anspruch 1, **gekennzeichnet durch** die Tatsache, dass Schließmechanismen eingebaut sind, um ein unbefugtes Öffnen des Reaktorblocks zu verhindern.

## Revendications

1. Réacteurs électrolytiques à membrane comprenant quatre chambres avec un dispositif de dégazage réglable, destinés à la production de produits de solution désinfectante à pH neutre, en activant de manière électrochimique une saumure faible, destinés à être utilisés pour la désinfection d'eau et de surfaces potables, **caractérisés par le fait qu'**il se composent de deux moitiés (5 et 6), qui sont reliées entre elles de manière à former le côté inférieur de cathode et le côté supérieur d'anode respectivement, d'un réacteur électrolytique, les chambres de cathode (7 et 8) étant usinées dans la moitié 5, et les chambres d'anode (9 et 10) étant usinées dans la moitié 6, et deux demi-chambres (11) étant placées entre ces chambres de cathode (7 et 8) et ces chambres d'anode (9 et 10) de chaque côté du réacteur, et qui forment une chambre de dégazage (11) lorsque les moitiés sont reliées entre elles ; dans cette condition, chaque chambre de cathode (7 et 8) est séparée de la chambre d'anode opposée (10 et 9) par une membrane d'échange cationique sélective (12) placée entre les électrodes du côté cathode (16) et les électrodes du côté anode (15), une paire de parois génératrices de tourbillons et formant entretoises (14) étant placées entre.

2. Réacteurs électrolytiques à membrane comprenant quatre chambres selon la revendication précédente, **caractérisés par le fait que** la saumure faible injectée au niveau de l'entrée du bloc réacteur (1) est soumise à un processus électrochimique à une seule cathode et à un processus électrochimique à deux anodes avec un dégazage intermittent réglable dans la chambre de dégazage (11) avec une sortie (2a) dotée d'une vanne ou d'un robinet de régulation.

3. Réacteurs électrolytiques à membrane comprenant quatre chambres selon l'une quelconque des revendications précédentes, **caractérisés par le fait que** tous les raccordements hydrauliques nécessaires des chambres de réaction (7, 8) et (9, 10) et de la chambre de dégazage (11), sont des raccords constitués de manière mécanique par des canaux et des trous alésés (1, 2, 3, 4, 13 et 13a) situés dans le logement des deux moitiés (5, 6) du bloc réacteur.

4. Réacteurs électrolytiques à membrane comprenant quatre chambres selon l'une quelconque des revendications précédentes, **caractérisés par le fait que** toutes les chambres, toutes les ouvertures et tous les canaux peuvent être usinés par fraisage dans des blocs de polyéthylène ou de polypropylène, ou par moulage sous pression.

5. Réacteurs électrolytiques à membrane comprenant quatre chambres selon l'une quelconque des revendications précédentes, **caractérisés par le fait que** la valeur du pH du produit d'électrolyse est réglable grâce à l'application d'un diagramme de flux et à la régulation d'une vanne de dégazage.

6. Réacteurs électrolytiques à membrane comprenant quatre chambres selon la revendication 1, **caractérisés par le fait que** les électrodes du côté anode présentent un revêtement d'oxyde de titane - iridium.

7. Réacteurs électrolytiques à membrane comprenant quatre chambres selon la revendication 1, **caractérisés par le fait que** les électrodes du côté cathode se composent d'acier inoxydable Hastelloy C 22.

8. Réacteurs électrolytiques à membrane comprenant quatre chambres selon la revendication 1, **caractérisés par le fait que** la membrane sélective qui sépare les chambres d'anode et les chambres de cathode, est une membrane sélective à film d'échange cationique.

9. Réacteurs électrolytiques à membrane comprenant quatre chambres selon la revendication 1, **caractérisés par le fait que** le liquide de traitement est acheminé vers une ouverture de sortie (13) à travers la paroi génératrice de tourbillons et formant entretoise (14) de telle sorte qu'il passe de manière homogène entre les électrodes (15, 16) et dans les chambres de réaction un champ électrique homogène est produit.

10. Réacteurs électrolytiques à membrane comprenant quatre chambres selon la revendication 1, **caractérisés par le fait qu'**un transformateur réseau (21) est utilisé.

11. Réacteurs électrolytiques à membrane comprenant quatre chambres selon la revendication 1, **caractérisés par le fait que** des mécanismes de fermeture sont prévus de manière à empêcher une ouverture non autorisée du bloc réacteur.
